# EUROPEAN PATENT SPECIFICATION

(11) **EP 3 324 079 B1**
(45) Date of publication and mention of the grant of the patent: **29.04.2020**
(21) Application number: 16306529.5
(22) Date of filing: 21.11.2016
(51) Int. Cl.: B64C 13/34

(54) **FLIGHT CONTROL SYSTEM AND METHOD OF MANUFACTURING A FLIGHT CONTROL SYSTEM**
FLUGSTEUERUNGSSYSTEM UND VERFAHREN ZUR HERSTELLEN EINES FLUGSTEUERUNGSSYSTEMS
SYSTÈME DE COMMANDE DE VOL ET PROCÉDÉ DE FABRICATION D'UN SYSTÈME DE COMMANDE DE VOL

(43) Date of publication of application: 23.05.2018
(73) Proprietor: Ratier-Figeac SAS, 46101 Figeac Cedex (FR)
(72) Inventor: CARRIE, Jean-Paul, 46100 FIGEAC (FR)
(74) Representative: Dehns

(56) References cited:
- EP-A1- 0 026 826
- DE-A1-102009 054 518
- GB-A- 713 847
- GB-A- 191 507 337
- JP-A- S57 110 866
- JP-A- S60 157 561
- US-A- 3 548 673
- US-A1- 2004 053 740

## Description

### Technical Field

This disclosure relates to a flight control system for an aircraft, such as a thrust control system (though the disclosure is not limited to such a system) comprising a gear arrangement associated with a control lever of the control system in which a control signal is generated based on the position or rate of movement of the control lever.

### Background

Between any two intermeshing gears, there will be a degree of backlash (also referred to as lash, play or free play) which is due to the clearance between mated gear teeth. This is a necessary design feature to prevent gears jamming, for example as a result of thermal expansion or deformation under load. It also allows for lubrication between the gears. In some cases it may be present as a result of wear, machining tolerances or machining defects.

It is desirable to eliminate or otherwise compensate for backlash in many applications. One such application is a control system which generates a control signal based on the position or rate of movement of a control lever. One specific example is actuation of a thrust control lever (or other flight control actuator) by a pilot of an aircraft. A small fraction of the pilot's input motion is lost to moving the gears into driving contact before torque is transmitted through the gear train. While the amount of movement can seem small, this backlash can result in loss of accuracy for an associated position sensor.

An existing way of compensating for backlash in such applications is to utilise a spring-loaded split gear. This comprises two superposed partial gears, biased relative to one another by a torsion spring to thereby increase the effective tooth thickness. The teeth of the spring-loaded split gear then completely fill the tooth space of the mating gear, thereby eliminating backlash.

An improved mechanism is sought for reducing backlash in a gear arrangement.

DE-A-102009054518 discloses a control wheel having a multi-turn angle sensor. In order that the system remembers the history of the steering movement (to distinguish different steering shaft revolutions even with the same angular position), a gearbox driven by the control wheel is used as a memory. The precision and reliability of the steering angle sensor is dependent on deviations of the gear ratio from the nominal value, caused for example by play in the gears. To combat this, each gear is provided with a coaxial roller which contacts the corresponding roller of any other gear that each gear is engaged with.

US-A-3548673 A discloses a combination toothed gear and friction gear train which alleviates backlash.

### Summary

According to a first aspect, the present disclosure can be seen to provide a flight control system for an aircraft comprising a gear arrangement and a control lever operable to drive the gear arrangement, the gear arrangement comprising a gear train having a first gear on a first axle and a second gear on a second axle, the first and second gears arranged to intermesh; wherein the gear arrangement is provided with a friction drive comprising a first rotary element mounted on the first axle arranged to frictionally drive a second rotary element mounted on the second axle.

The gear train and friction drive may be synchronous, i.e. the first gear of the gear train and the first rotary element of the friction drive are driven at the same time.

The first rotary element and second rotary element may be always in contact. Each rotary element may contact the other at a point on the other's circumference.

The friction drive may have substantially no backlash, transferring drive from one axle to another straight away without any play, at low levels of torque.

The first rotary element and second rotary element may be wheels. Each wheel may be shaped as a disc, a cylinder, a cone, a truncated cone, a spherical ball or an ovoid ball.

The first and second axles are parallel.

The diameter of the first rotary element may be substantially equal to the diameter of the pitch circle of the first gear, and the diameter of the second rotary element may be substantially equal to the diameter of the pitch circle of the second gear.

By way of example, the gears may comprise spur gears, bevel gears, helical gears or epicyclic gears.

The control system may comprise a position sensor operable to determine the position of the control lever.

The control system may be a thrust control system comprising a thrust control lever.

According to a second aspect, the present disclosure can be seen to provide a method of manufacturing a flight control system for an aircraft comprising: providing a gear train having a first gear on a first axle and a second gear on a second axle, the first and second gears arranged to intermesh; providing a friction drive by mounting a first rotary element on the first axle and a second rotary element on the second axle, the first rotary element being arranged to frictionally drive the second rotary element; and providing a control lever operable to drive the gear train and friction drive.

The gear train and friction drive may be synchronous (i.e. the first gear of the gear train and the first rotary element of the friction drive are driven at the same time).

The first rotary element and second rotary element may be wheels. Each wheel may be shaped as a disc, a cylinder, a cone, a truncated cone, a spherical ball or an ovoid ball.

The first and second axles may be parallel.

The diameter of the first rotary element may be substantially equal to the diameter of the pitch circle of the first gear, and the diameter of the second rotary element may be substantially equal to the diameter of the pitch circle of the second gear.

By way of example, the gears may comprise spur gears, bevel gears, helical gears or epicyclic gears.

### Brief description of the Figures

Certain embodiments of the present disclosure will now be described in greater detail by way of example only and with reference to the accompanying drawings, in which:
Figure 1 shows an exemplary gear arrangement of the present disclosure;
Figure 2 shows an exemplary spur gear train of the exemplary gear arrangement;
Figure 3 shows an exemplary bevel gear train of the present disclosure;
Figure 4 shows an exemplary helical gear train of the present disclosure;
Figure 5 shows an exemplary epicyclic gear train of the present disclosure;
Figure 6 shows an exemplary control system of the present disclosure; and
Figure 7 shows an exemplary position sensor for use in the exemplary control system of the present disclosure.

### Detailed description

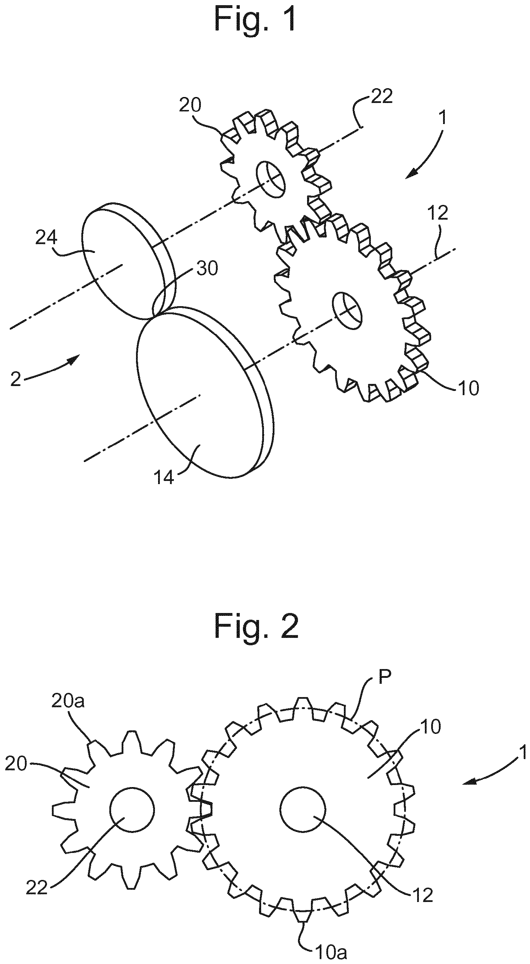

Figure 1 shows an exemplary gear arrangement comprising a gear train 1 (also shown in Figure 2) and a friction drive 2. The friction drive 2 is mounted in parallel to the gear train 1.

The gear train 1 comprises a first gear 10 mounted on a first axle 12 and intermeshed with a second gear 20 which is mounted on a second axle 22. The first and second axles 12, 22 are parallel in this example.

The friction drive 2 comprises a first wheel 14 mounted on the first axle 12 and a second wheel 24 mounted on the second axle 22. The first wheel 14 is parallel to the first gear 10 and the second wheel 24 is parallel to the second gear 20 through the wheels 14, 24 being mounted on the respective axles 12, 22.

As the terms are used herein, a "gear train" comprises two or more gears which have teeth that intermesh. The teeth may be radially extending teeth provided on a circumference of the gear, the teeth may comprise a twisted profile to provide a plurality of helical gear teeth, they may be bevelled to transmit drive through an angle to an associated bevelled gear, or they may comprise any other form of gear teeth where the teeth intermesh in order to transmit torque from one gear to the next through the interaction of the teeth.

By contrast, by the term "friction drive" it is meant an arrangement of two or more rotary elements, typically in the form of planar wheels, though they may take an alternative form, where a circumferential perimeter of a first rotary member is in contact with the circumferential perimeter of the second rotary member, and through frictional contact between such circumferential surfaces, is able to transmit drive from one rotary member to the next. The friction drive may have substantially no backlash, transferring drive from one axle to another straight away without any play, at low levels of torque.

The first wheel 14 may be mounted close to the first gear 10 (for example, in a flight control system, the first wheel 14 may be within approximately 1 millimetre to approximately 5 centimetres) and the second wheel 24 may be mounted correspondingly close to the second gear 20 so that the second wheel 24 is aligned with and arranged in contact with the first wheel 14.

The first and second wheels 14, 24 may be made of dissimilar, generally similar or exactly the same materials. One or both of the wheels 14, 24 may comprise a polymer, for example. In one example one or both of the wheels 14, 24 are made from vulcanised rubber or a similar material possessing a comparatively high coefficient of friction. One or both of the wheels 14, 24 may be made from metal or other material and possibly include a layer of material with a higher coefficient of friction, for example in the form of a rubber band or infill.

As the purpose of the friction drive 2 is to transmit torque (drive) from the first axle 12 to the second axle 22 when the gears 10, 20 are not in driving contact, the materials should be chosen with suitable coefficients of friction to transmit drive, at least up to a point before the gear train 1 takes over in the drive transmission. As part of the selection of materials, some consideration may be needed with regard to contact pressures, resiliency and wear of the materials.

The circumference of the wheels 14, 24 may be smooth, and even to an extent, compliant under the contact pressures. The circumference of one of both of the wheels 14, 24 could also include a tread pattern of some form.

Between teeth 10a (shown in Figure 2) of the first gear 10 and teeth 20a of the second gear 20, there is an amount of backlash to allow the gears to intermesh properly and to prevent jamming. This backlash corresponds to spacing between the faces of the teeth before they contact one another to transmit drive. It may only be a small amount but it will be present nevertheless.

In contrast, the first and second wheels 14, 24 are in constant frictional contact with one another, at a point 30 along the circumference of each of the wheels 14, 24. The friction drive experiences no or substantially no backlash, because rotation in one wheel will be reflected instantly in rotation in the other (within the tolerances of material resilience).

As can be seen in Figure 1, the diameter of the first wheel 14 may be substantially equal to the diameter of the pitch circle P (see Figure 2) of the first gear 10. Similarly, the diameter of the second rotary element 24 may be substantially equal to the diameter of the pitch circle of the second gear 20. In this way, the rotational speeds of the gears 10, 20 and the wheels 14, 24 can be made to match one another.

Where relatively soft or compliant materials are used for one or both of the wheels 14, 24 and the contact pressure is such as to flatten or indent the surface of a wheel where it is in contact with another, then the diameter can be chosen accordingly to take account of this flattening and to match the pitch circle of the corresponding gear 10, 20.

The first gear 10 and second gear 20 (i.e. the gear train 1) provide a primary torque path for transferring torque from the first axle 12 to the second axle 22 when the teeth 10a, 20a of the gears 10, 20 are in driving contact. This would be the condition when the level of torque is relatively high or when the gears 10, 20 are moving relative to one another at higher speeds, for example, when a control employing the gear train 1 is being moved through a large range of movement.

The first wheel 14 and second wheel 24 (i.e. the friction drive 2) provide a secondary torque path for transferring torque from the first axle 12 to the second axle 22 without backlash when the teeth 10a, 20a of the gears 10, 20 are not in driving contact, for example, during the initial stages of movement of a control as the backlash is taken up. At these lower levels of torque and lower speeds associated with much smaller movements in the control, the friction drive 2 allows the second axle 22 to be driven by rotation of the first axle 12 even when the first gear 10 and second gear 20 are not in driving contact.

The gear arrangement of the present disclosure therefore, through the modification of the friction drive, has zero or substantially zero backlash. At low torque (up to a point where the torque across the friction drive exceeds a coefficient of friction between the rotary members of the friction drive) the friction drive is operational and inherently has no backlash, and at higher torque the gear teeth are driving each other and in that operational state there will be no backlash to take up in the continued rotation of the gears.

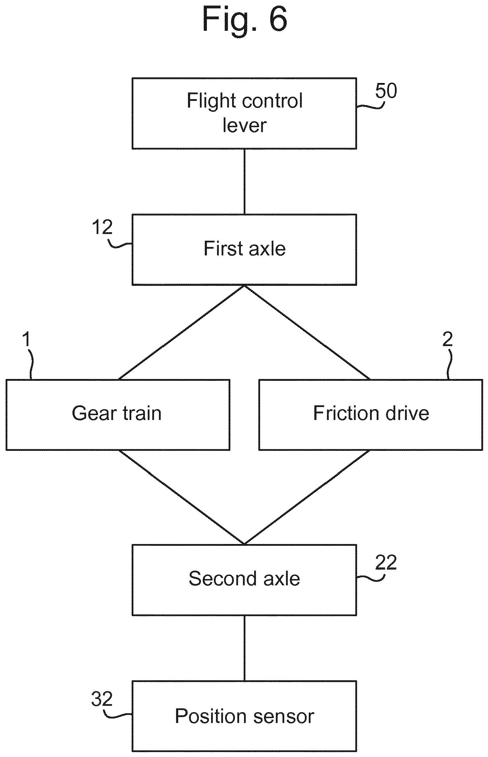

The operation of the gear arrangement comprising the gear train 1 and friction drive 2 is further explained with reference to Figure 6, which shows an illustrative view of a control system in accordance with an embodiment of the disclosure.

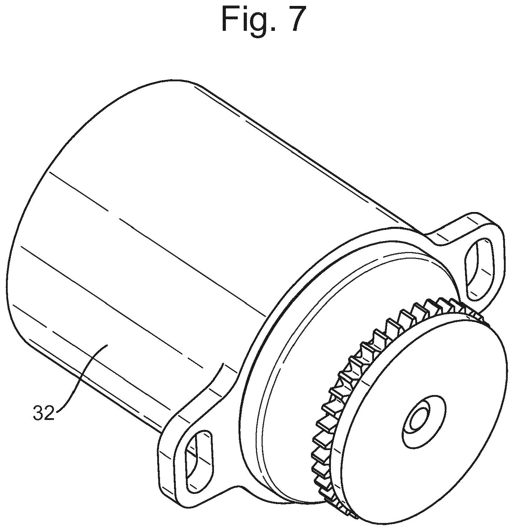

Figure 6 shows a control lever 50 which is mechanically coupled to the first axle 12. The control lever 50 is actuated by an operator (for example a pilot) to control a system. Movement of the control lever 50 causes the first axle 12 to rotate. Since the first gear 10 and first wheel 14 are mounted to the first axle 12, they also rotate along with the first axle 12. Due to backlash between the first gear 10 and second gear 20, depending on where the gears 10, 20 are lying relative to each other at the time, the teeth 10a, 20a of the first and second gears 10 and 20 may not be initially in driving contact. The output of the second axle 22, which is driven by the gear train 1 or friction drive 2, is coupled to a position sensor 32 (also shown in Figure 7), such as an RVDT (rotary variable differential transformer) sensor or similar, for providing an electrical signal. This signal may be for controlling part of an aircraft, for example for controlling thrust delivered from an engine.

In a system which is not provided with the parallel friction drive 2, this could result in a loss of accuracy within the control system - the operator's input to the system is not immediately transmitted through the system because the backlash must first be overcome. However, in the system of the present disclosure, the parallel friction drive 2 is able to compensate for the backlash in the gear train 1. When the first wheel 14 rotates (due to rotation of the first axle 12) the frictional contact 30 with the second wheel 24 causes the first wheel 14 to drive the second wheel 24 to rotate. Since the second wheel 24 is mounted on the second axle 22, the second axle 22 also rotates. Drive is thereby transmitted from the first axle 12 to the second axle 22 via the friction drive 2, even when the first gear 10 and second gear 20 of the gear train 1 are not in driving contact. The effect of backlash between the first gear 10 and second gear 20 is thereby effectively eliminated, meaning that the control system is more accurate.

The control system of the present disclosure therefore, through the modification of the friction drive, has zero or substantially zero backlash. At low torque (up to a point where the torque across the friction drive exceeds a coefficient of friction between the rotary members of the friction drive) the friction drive is operational and inherently has no backlash, and at higher torque the gear teeth are driving each other and in that operational state there will be no backlash to take up in the continued rotation of the gears.

The gear arrangement can be used in any flight control system where torque may be applied to the first axle 12 at a level which is sufficiently small and sufficiently low speed that the resistance (frictional contact) between the first wheel 14 and second wheel 24 is able to allow the first wheel 14 to drive the second wheel 24. When higher levels of torque are applied, the backlash would not be met by drive between the wheels; the wheels would just slip past one another.

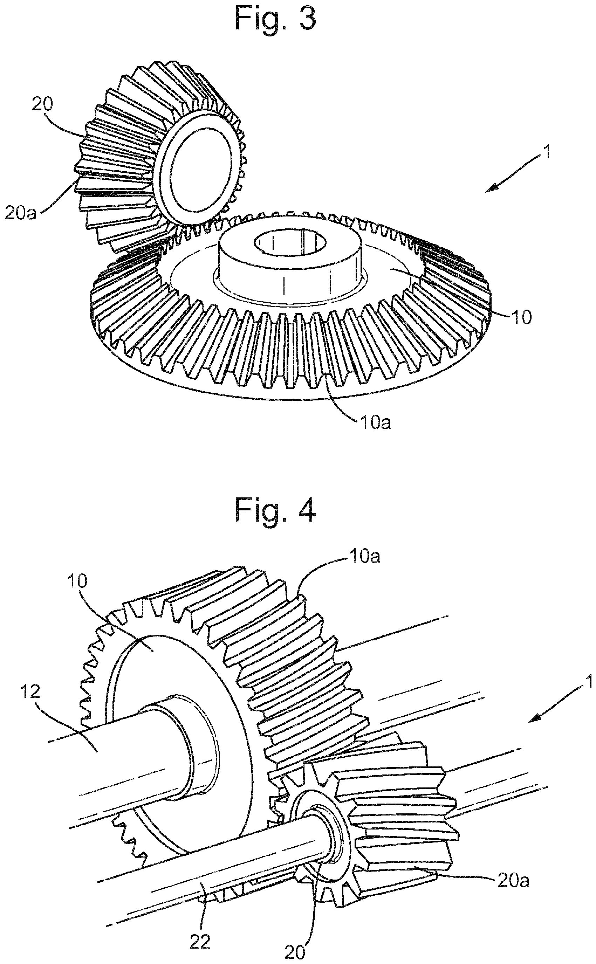

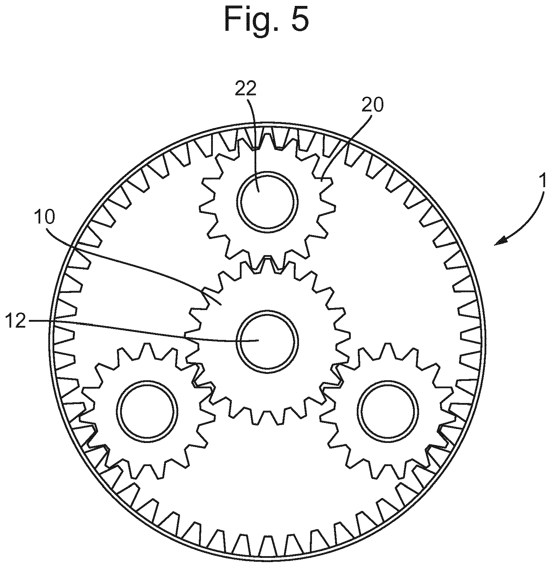

Whilst the first and second gears 10, 20 shown in Figures 1 and 2 are spur gears, no limitation is intended by this illustration. The gears 10, 20 could be any other type of gear, for example bevel gears (as shown in Figure 3) or helical gears (as shown in Figure 4). Additionally, the gear train 1 may comprise more than the two gears shown or it may be an epicyclic gear train (as shown in Figure 5).

In Figure 1, the first and second axles 12, 22 are parallel. However, this may not be the case (for example if the first and second gears 10, 20 are bevel gears).

Moreover no limitation on the gear ratio of the gear train 1 is implied by the illustrations of the first gear 10 and the second gear 20 in Figures 1 and 2. Thus, though the first gear 10 is shown as being larger than the second gear 20, the second gear 20 could instead be larger or the same size as the first gear 10. Similarly, the number of teeth 10a of the first gear 10 and teeth 20a of the second gear 20 shown in Figures 1 and 2 is exemplary only.

Whilst the first wheel 14 and second wheel 24 are shown as planar wheels (i.e. discs) in Figure 1, the term "wheel" encompasses many wheel shapes, such as for example a cylinder (roller), cone, truncated cone or ball (for example a spherical ball or ovoid ball). These may share the feature that the rotary member, i.e. the wheel, has an axle for rotating around. Either or both of the first wheel and second wheel may have such a configuration. The size of the circumferential contact area must be large enough to allow a sufficiently large frictional force (resistive force) between the wheels to be generated. The required frictional force of course depends on the system in which the gear arrangement is used.

In the embodiment of Figure 1, the diameter of the first wheel 14 is substantially equal to the diameter of the pitch circle P (see Figure 2) of the first gear 10, and the diameter of the second rotary element 24 is substantially equal to the diameter of the pitch circle of the second gear 20. However, in alternative embodiments, to choose an appropriate resistive force between the wheels, there may be a small mismatch between the diameters of the wheels and the pitch circle P of the corresponding gears. The mismatch may be of the order of less than10%, or may be less than 8%, less than 6%, less than 4%, or less than 2%. For example, if the diameter(s) of the one or both wheels is/are larger than the pitch circle(s) of the corresponding gear(s), a larger resistive force (frictional force) will exist between the wheels, compared to an embodiment where the diameters of both wheels are equal to the pitch circles P of the corresponding gears.

Thus according to the above disclosure, there can be seen to be provided a flight control system for an aircraft comprising a gear arrangement and a control lever operable to drive the gear arrangement, the gear arrangement comprising a gear train arranged to deliver drive from an input to an output wherein the gear arrangement includes a friction drive which is driven synchronously with the gear train, the friction drive being arranged to reduce an amount of backlash present in the gear train by transmitting drive from the input to the output at low levels of torque up to a point where the torque across the friction drive exceeds a coefficient of friction between the rotary members of the friction drive. Such a gear arrangement can have any of the features described herein. At least in the illustrated embodiments it may be possible to provide an alternative to known arrangements for minimising backlash, which is potentially simpler, lower cost, and more robust.

## Claims

1. A flight control system for an aircraft comprising a gear arrangement (10,20) and a control lever (50) J operable to drive the gear arrangement, the gear arrangement comprising a gear train having a first gear (10) on a first axle (12) and a second gear (20) on a second axle (22), the first and second gears arranged to intermesh;
**characterized in that** the gear arrangement is provided with a friction drive (14,24) comprising a first rotary element (12) mounted on the first axle arranged to frictionally drive a second rotary element (24) mounted on the second axle.

2. A flight control system as claimed in claim 1, wherein the first rotary element and second rotary element are always in contact, each rotary element contacting the other at a point on the other's circumference.

3. A flight control system as claimed in claim 1 or 2, wherein the first rotary element and second rotary element are wheels.

4. A flight control system as claimed in claim 3, wherein each wheel is shaped as a disc, a cylinder, a cone, a truncated cone, a spherical ball or an ovoid ball.

5. A flight control system as claimed in any preceding claim, wherein the first and second axles are parallel.

6. A flight control system as claimed in any preceding claim, wherein the diameter of the first rotary element is substantially equal to the diameter of the pitch circle of the first gear, and the diameter of the second rotary element is substantially equal to the diameter of the pitch circle of the second gear.

7. A flight control system as claimed in any preceding claim, wherein the gears comprise spur gears, bevel gears, helical gears or epicyclic gears.

8. A flight control system as claimed in any preceding claim, further comprising a position sensor operable to determine the position of the control lever.

9. A method of manufacturing a flight control system for an aircraft comprising:
providing a gear train having a first gear (10) on a first axle (12) and a second gear (20) on a second axle (22), the first and second gears arranged to intermesh;
providing a friction drive (14,24) by mounting a first rotary element (14) on the first axle and a second rotary element (24) on the second axle, the first rotary element being arranged to frictionally drive the second rotary element;
and providing a control lever (50) operable to drive the gear train and friction drive.

10. A method as claimed in claim 9 wherein the first rotary element and second rotary elements are wheels.

11. A method as claimed in claim 10, wherein each wheel is shaped as a disc, a cylinder, a cone, a truncated cone, a spherical ball or an ovoid ball.

12. A method as claimed in claims 9, 10 or 11, wherein the first and second axles are parallel.

13. A method as claimed in any of claims 9 to 12, wherein the diameter of the first rotary element is substantially equal to the diameter of the pitch circle of the first gear, and the diameter of the second rotary element is substantially equal to the diameter of the pitch circle of the second gear.

14. A method as claimed in any of claims 9 to 13, wherein the gears comprise spur gears, bevel gears, helical gears or epicyclic gears.

## Patentansprüche

1. Flugsteuerungssystem für ein Luftfahrzeug, umfassend eine Zahnradanordnung (10, 20) und einen Steuerhebel (50), der betrieben werden kann, um die Zahnradanordnung anzutreiben, wobei die Zahnradanordnung ein Zahnradpaar umfasst, das ein erstes Zahnrad (10) auf einer ersten Achse (12) und ein zweites Zahnrad (20) auf einer zweiten Achse (22) aufweist, wobei das erste und das zweite Zahnrad so angeordnet sind, dass sie ineinandergreifen;
**dadurch gekennzeichnet, dass**
die Zahnradanordnung mit einem Reibantrieb (14, 24) versehen ist, der ein erstes Drehelement (14) umfasst, das auf der ersten Achse montiert ist und angeordnet ist, um ein zweites Drehelement (24), das auf der zweiten Achse montiert ist, durch Reibung anzutreiben.

2. Flugsteuerungssystem nach Anspruch 1, wobei das erste Drehelement und das zweite Drehelement immer in Kontakt sind, wobei jedes Drehelement das andere an einem Punkt am Umfang des anderen berührt.

3. Flugsteuerungssystem nach Anspruch 1 oder 2, wobei das erste Drehelement und das zweite Drehelement Räder sind.

4. Flugsteuerungssystem nach Anspruch 3, wobei jedes Rad als eine Scheibe, ein Zylinder, ein Kegel, ein Kegelstumpf, eine sphärische Kugel oder eine eiförmige Kugel geformt ist.

5. Flugsteuerungssystem nach einem der vorstehenden Ansprüche, wobei die erste und die zweite Achse parallel sind.

6. Flugsteuerungssystem nach einem der vorstehenden Ansprüche, wobei der Durchmesser des ersten Drehelements im Wesentlichen mit dem Durchmesser des Teilkreises des ersten Zahnrads identisch ist und der Durchmesser des zweiten Drehelements im Wesentlichen mit dem Durchmesser des Teilkreises des zweiten Zahnrads identisch ist.

7. Flugsteuerungssystem nach einem der vorstehenden Ansprüche, wobei die Zahnräder Geradstirnräder, Kegelräder, Schrägstirnräder oder Planetenräder umfassen.

8. Flugsteuerungssystem nach einem der vorstehenden Ansprüche, ferner umfassend einen Positionssensor, der betrieben werden kann, um die Position des Steuerhebels zu ermitteln.

9. Verfahren zum Herstellen eines Flugsteuerungssystems für ein Luftfahrzeug, umfassend:
Bereitstellen eines Zahnradpaars, das ein erstes Zahnrad (10) auf einer ersten Achse (12) und ein zweites Zahnrad (20) auf einer zweiten Achse (22) aufweist, wobei das erste und das zweite Zahnrad so angeordnet sind, dass sie ineinandergreifen;
Bereitstellen eines Reibantriebs (14, 24) durch Montieren eines ersten Drehelements (14) auf der ersten Achse und eines zweiten Drehelements (24) auf der zweiten Achse, wobei das erste Drehelement so angeordnet ist, dass es das zweite Drehelement durch Reibung antreibt;
und Bereitstellen eines Steuerhebels (50), der betätigt werden kann, um das Zahnradpaar und den Reibantrieb anzutreiben.

10. Verfahren nach Anspruch 9, wobei das erste Drehelement und das zweite Drehelement Räder sind.

11. Verfahren nach Anspruch 10, wobei jedes Rad als eine Scheibe, ein Zylinder, ein Kegel, ein Kegelstumpf, eine sphärische Kugel oder eine eiförmige Kugel geformt ist.

12. Verfahren nach den Ansprüchen 9, 10 oder 11, wobei die erste und die zweite Achse parallel sind.

13. Verfahren nach einem der Ansprüche 9 bis 12, wobei der Durchmesser des ersten Drehelements im Wesentlichen mit dem Durchmesser des Teilkreises des ersten Zahnrads identisch ist und der Durchmesser des zweiten Drehelements im Wesentlichen mit dem Durchmesser des Teilkreises des zweiten Zahnrads identisch ist.

14. Verfahren nach einem der Ansprüche 9 bis 13, wobei die Zahnräder Geradstirnräder, Kegelräder, Schrägstirnräder oder Planetenräder umfassen.

## Revendications

1. Système de commande de vol pour un avion comprenant un agencement d'engrenages (10, 20) et un levier de commande (50) utilisable pour entraîner l'agencement d'engrenages,
l'agencement d'engrenages comprenant un train d'engrenages ayant un premier engrenage (10) sur un premier essieu (14) et un deuxième engrenage (20) sur un deuxième essieu (22), les premier et deuxième engrenages agencés pour s'engager ;
**caractérisé en ce que** l'agencement d'engrenages est pourvu d'un entraînement par frottement (14, 24) comprenant un premier élément rotatif (12) monté sur le premier essieu agencé pour entraîner par frottement un deuxième élément rotatif (24) monté sur le deuxième essieu.

2. Système de commande de vol selon la revendication 1, dans lequel le premier élément rotatif et le deuxième élément rotatif sont toujours en contact, chaque élément rotatif entrant en contact avec l'autre à un point sur la circonférence de l'autre.

3. Système de commande de vol selon la revendication 1 ou 2, dans lequel le premier élément rotatif et le deuxième élément rotatif sont des roues.

4. Système de commande de vol selon la revendication 3, dans lequel chaque roue a la forme d'un disque, d'un cylindre, d'un cône, d'un cône tronqué, d'une balle sphérique ou d'une balle ovoïde.

5. Système de commande de vol selon une quelconque revendication précédente, dans lequel les premier et deuxième essieux sont parallèles.

6. Système de commande de vol selon une quelconque revendication précédente, dans lequel le diamètre du premier élément rotatif est substantiellement égal au diamètre du cercle primitif du premier engrenage, et le diamètre du deuxième élément rotatif est substantiellement égal au diamètre du cercle primitif du deuxième engrenage.

7. Système de commande de vol selon une quelconque revendication précédente, dans lequel les engrenages comprennent des engrenages droits, des engrenages coniques, des engrenages hélicoïdaux ou des engrenages elliptiques.

8. Système de commande de vol selon une quelconque revendication précédente, comprenant en outre un capteur de position utilisable pour déterminer la position du levier de commande.

9. Procédé de fabrication d'un système de commande de vol pour un avion comprenant :
la fourniture d'un train d'engrenages ayant un premier engrenage (10) sur un premier essieu (12) et un deuxième engrenage (20) sur un deuxième essieu (22), les premier et deuxième engrenages agencés pour s'engager ;
la fourniture d'un entraînement par frottement (14, 24) en montant un premier élément rotatif (14) sur le premier essieu et un deuxième élément rotatif (24) sur le deuxième essieu, le premier élément rotatif étant agencé pour entraîner par frottement le deuxième élément rotatif ;
et la fourniture d'un levier de commande (50) utilisable pour entraîner le train d'engrenages et l'entraînement par frottement.

10. Procédé selon la revendication 9 dans lequel le premier élément rotatif et le deuxième élément rotatif sont des roues.

11. Procédé selon la revendication 10, dans lequel chaque roue a la forme d'un disque, d'un cylindre, d'un cône, d'un cône tronqué, d'une balle sphérique ou d'une balle ovoïde.

12. Procédé selon les revendications 9, 10 ou 11, dans lequel les premier et deuxième essieux sont parallèles.

13. Procédé selon une quelconque des revendications 9 à 12, dans lequel le diamètre du premier élément rotatif est substantiellement égal au diamètre du cercle primitif du premier engrenage, et le diamètre du deuxième élément rotatif est substantiellement égal au diamètre du cercle primitif du deuxième engrenage.

14. Procédé selon une quelconque des revendications 9 à 13, dans lequel les engrenages comprennent des engrenages droits, des engrenages coniques, des engrenages hélicoïdaux ou des engrenages elliptiques.
